(19)

Europäisches
Patentamt
European
Patent Office
Office européen
des brevets

(11) **EP 2 953 230 A1**

(12) # EUROPEAN PATENT APPLICATION
published in accordance with Art. 153(4) EPC

(43) Date of publication:
**09.12.2015 Bulletin 2015/50**

(51) Int Cl.:
*H02J 3/46* (2006.01)    *G06Q 50/06* (2012.01)
*H02J 3/00* (2006.01)    *H02J 3/32* (2006.01)
*H02J 7/35* (2006.01)    *H02J 13/00* (2006.01)

(21) Application number: **13824087.4**

(22) Date of filing: **16.12.2013**

(86) International application number:
**PCT/JP2013/083651**

(87) International publication number:
**WO 2014/119153 (07.08.2014 Gazette 2014/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.01.2013 JP 2013017607**

(71) Applicant: **Kabushiki Kaisha Toshiba
Minato-ku
Tokyo 105-8001 (JP)**

(72) Inventors:
• **KATAYAMA, Kyosuke
Tokyo 105-8001 (JP)**
• **KUBOTA, Kazuto
Tokyo 105-8001 (JP)**

• **WADA, Takahisa
Tokyo 105-8001 (JP)**
• **MATSUE, Kiyotaka
Tokyo 105-8001 (JP)**
• **SUYAMA, Akihiro
Tokyo 105-8001 (JP)**
• **TANIMOTO, Tomohiko
Tokyo 105-8001 (JP)**
• **TAIRA, Hiroshi
Tokyo 105-8001 (JP)**

(74) Representative: **Moreland, David et al
Marks & Clerk LLP
Aurora
120 Bothwell Street
Glasgow G2 7JS (GB)**

(54) **ENERGY MANAGEMENT SYSTEM, ENERGY MANAGEMENT METHOD, PROGRAM AND SERVER**

(57) According to an embodiment, an energy management system includes estimator, calculator, creator and controller. Estimator estimates energy demand of customer to obtain estimated demand, and estimates power generation amount of renewable power generator to obtain estimated power generation amount. Calculator calculates operation schedule of nonrenewable power generator based on estimated demand and estimated power generation amount. Creator creates strategy maximizes difference between electricity cost loss and profit using push up effect by discharge of battery based on estimated demand and power generation amount, and schedule. Controller controls discharge of battery based on actual value of demand and power generation amount, schedule and strategy.

F I G. 5

**Description**

Technical Field

Embodiments described herein relate generally to an energy management system for managing the energy balance of a customer such as a home, an energy management method, a program, and a server.

Background Art

A HEMS (Home Energy Management System) has received a great deal of attention against the background of recently increasing awareness of environmental preservation and anxiety about shortages in the supply of electricity. HEMS can connect distributed power supplies (to be generically referred to as new energy devices hereinafter) such as a PV (Photovoltaic power generation) system, a storage battery, and an FC (Fuel Cell) and existing home appliances to a network and collectively manage them.

PV units have become widespread and been installed in many homes with backup of FIT (Feed In Tariff) for renewable energy and subsidies. Storage batteries for domestic use have also been put into practical use. They are playing a role in protecting against power failure and leveling the load of power. When these systems are combined, the sold electricity amount derived from renewable energy can be increased by making the discharge of the storage battery compensate for the power demand at the time of PV power generation. This is the advantage of a so-called push up effect (Japanese Patent Application No. 2012-255301).

Of the new energy devices, the FC is expected to proliferate in the future. The FC can stably generate power and supply heat energy using waste heat at any time of day or night independently of the weather. For example, there exists a technique of controlling the FC based on an estimated hot water supply demand of a home. There is also known a technique of avoiding reverse power flow to the grid or wasteful electricity purchase from the grid by combining the FC and the storage battery. A technique of modeling a household distributed power supply including the FC and calculating the operation schedule is already known as well.

Citation List

Patent Literatures

Patent Literature 1: Jpn. Pat. Appln. KOKAI Publication No. 2010-67512
Patent Literature 2: Jpn. Pat. Appln. KOKAI Publication No. 2009-240080
Patent Literature 3: Jpn. Pat. Appln. KOKAI Publication No. 2010-273407

Summary of Invention

Technical Problem

The FC has a characteristic of simultaneously generating power and heat (cogeneration). Since charging and discharging the storage battery affect the power generation amount of the FC, the optimum charge and discharge timing of the storage battery cannot be decided without taking the power generation amount of the FC at the time into consideration. Such interaction makes it difficult to collectively manage the PV unit, the storage battery, and the FC and reduce the energy cost for both the electricity rate and the gas rate. There is thus demanded a technology capable of eliminating waste energy consumption and reducing the energy cost as much as possible.

An object of the present invention is to provide an energy management system capable of exploiting the characteristic of a fuel cell and advantageously operating a new energy device, an energy management method, a program, and a server.

Solution to Problem

According to an aspect, an energy management system includes an estimation unit, a calculation unit, a creation unit, and a control unit. The estimation unit estimates the demand of energy of a customer to obtain the estimated value of the demand, and estimates the power generation amount of a first power generation unit configured to generate power derived from renewable energy to obtain the estimated value of the power generation amount. The calculation unit calculates the operation schedule of a second power generation unit configured to generate power derived from nonrenewable energy based on the estimated value of the demand and the estimated value of the power generation amount. The creation unit creates a discharge strategy capable of maximizing a balance obtained by subtracting an electricity purchase loss from an electricity selling profit using the push up effect of a sold electricity amount by discharge of a battery device based on the estimated value of the demand, the estimated value of the power generation amount, and the operation schedule. The control unit controls discharge of the battery device based on an actual value of the demand, the actual value of the power generation amount, the operation schedule, and the discharge strategy.

Brief Description of Drawings

[FIG. 1] FIG. 1 is a view showing an example of a system according to an embodiment.
[FIG. 2] FIG. 2 is a view showing an example of an energy management system according to the embodiment.
[FIG. 3] FIG. 3 is a functional block diagram showing the main part of a HEMS according to the first embodiment.
[FIG. 4] FIG. 4 is a block diagram for explaining a control target model 300g.
[FIG. 5] FIG. 5 is a functional block diagram showing an example of a storage battery rule creation unit 122 shown in FIG. 3.
[FIG. 6] FIG. 6 is a table showing an example of a charge and discharge value table of a storage battery 102.
[FIG. 7] FIG. 7 is a flowchart showing a processing procedure according to the first embodiment.
[FIG. 8] FIG. 8 is a conceptual view showing an example of the gene design of a genetic algorithm according to the embodiment.
[FIG. 9] FIG. 9 is a flowchart showing an example of the procedure of an optimization operation according to the embodiment.
[FIG. 10] FIG. 10 is a flowchart showing an example of the processing procedure of discharge rule creation according to the first embodiment.
[FIG. 11A] FIG. 11A is a graph showing an example of a PV power generation amount estimated value $P_{PV}(t)$.
[FIG. 11B] FIG. 11B is a graph showing an example of a corrected value $\tilde{P}_D(t)$ of a power demand estimated value.
[FIG. 11C] FIG. 11C is a graph showing an example of a discharge value $V(t)$.
[FIG. 11D] FIG. 11D is a graph showing an example of a discharge value rate estimated value $E(t)$.
[FIG. 12] FIG. 12 is a flowchart showing an example of the processing procedure of a battery controller 131.
[FIG. 13] FIG. 13 is a functional block diagram showing the main part of a HEMS according to the second embodiment.
[FIG. 14] FIG. 14 is a functional block diagram showing an example of a storage battery rule creation unit 122 shown in FIG. 13.
[FIG. 15] FIG. 15 is a flowchart showing an example of the processing procedure of discharge rule creation according to the second embodiment.
[FIG. 16A] FIG. 16A is a graph showing an example of a diurnal variation of the SOC of a storage battery 102.
[FIG. 16B] FIG. 16B is a graph showing another example of the diurnal variation of the SOC of the storage battery 102.
[FIG. 17] FIG. 17 is a graph for explaining an effect obtained by the second embodiment.

Description of Embodiments

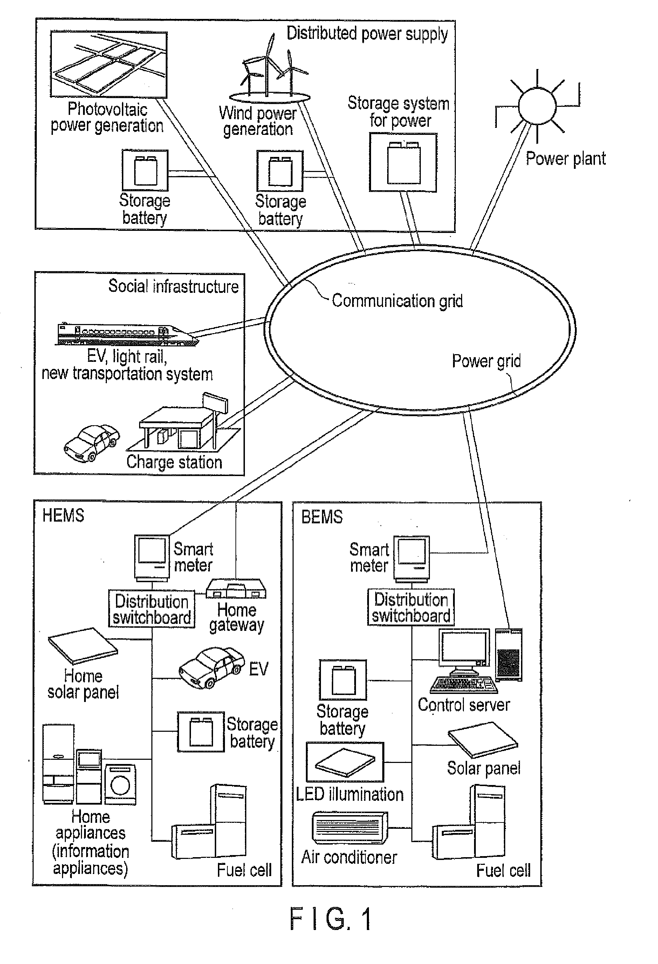

FIG. 1 is a view showing an example of a system according to an embodiment. FIG. 1 illustrates an example of a system known as a so-called smart grid. In an existing grid, existing power plants such as a nuclear power plant, a thermal power plant, and a hydraulic power plant are connected to various customers such as an ordinary household, a building, and a factory via the grid. In the next-generation power grid, distributed power supplies such as a PV (Photovoltaic power generation) system and a wind power plant, battery devices, new transportation systems, charging stations, and the like are additionally connected to the power grid. The variety of elements can communicate via a communication grid.

Systems for managing energy are generically called EMSs (Energy Management Systems). The EMSs are classified into several groups in accordance with the scale and the like. There are, for example, a HEMS (Home Energy Management System) for an ordinary household and a BEMS (Building Energy Management System) for a building. There also exist an MEMS (Mansion Energy Management System) for an apartment house, a CEMS (Community Energy Management System) for a community, and a FEMS (Factory Energy Management System) for a factory. Good energy optimization control is implemented by causing these systems to cooperate.

According to these systems, an advanced cooperative operation can be performed between the existing power plants, the distributed power supplies, the renewable energy sources such as sunlight and wind, and the customers. This makes it possible to produce a power supply service in a new and smart form, such as an energy supply system mainly using a natural energy or a customer participating-type energy supply/demand system by bidirectional cooperation of customers and companies.

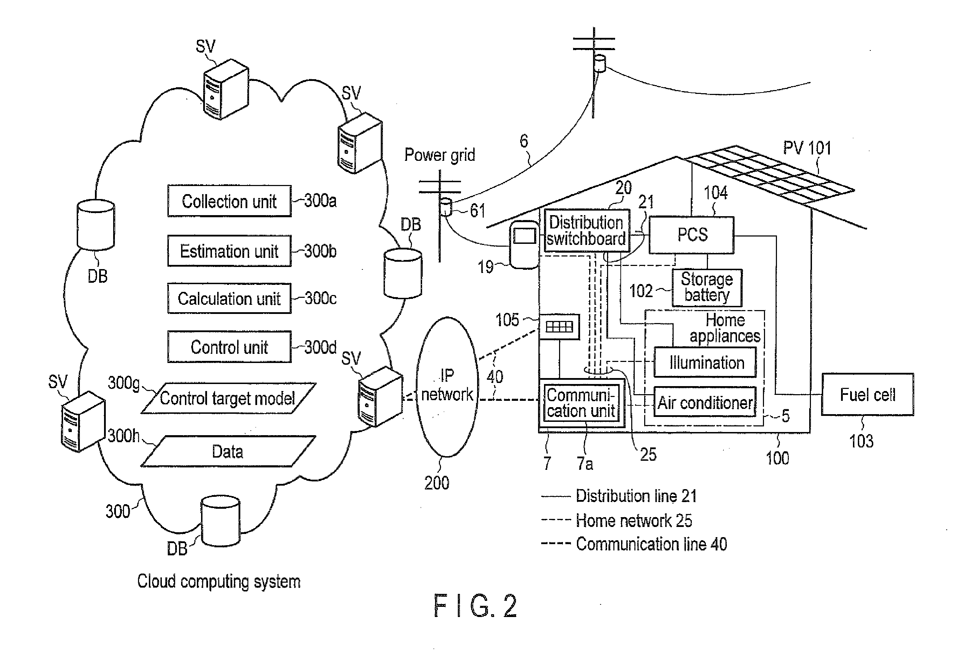

FIG. 2 is a view showing an example of an energy management system according to the embodiment. The HEMS includes a client system, and a cloud computing system (to be abbreviated as a cloud hereinafter). 300. The cloud 300 can be understood as a server system capable of communicating with the client system.

The client system includes a home gateway (HGW) 7. The home gateway 7 is a communication apparatus installed in a home 100, and can receive various kinds of services from the cloud 300.

The cloud 300 includes a server computer SV and a database DB. The server computer SV can include a single or a plurality of server computers. The databases DB can be either provided in the single server computer SV or distributively arranged for the plurality of server computers SV.

Referring to FIG. 2, power (AC voltage) supplied from a power grid 6 is distributed to households via, for example, a transformer 61, and supplied to a distribution switchboard 20 in the home 100 via a watt-hour meter (smart meter) 19. The watt-hour meter 19 has a function of measuring the power generation amount of an energy generation device provided in the home 100, the power consumption of the home 100, the electric energy supplied from the power grid 6, the amount of reverse power flow to the power grid 6, and the like. As is known, power generated based on renewable energy is permitted to flow back to the power grid 6.

The distribution switchboard 20 supplies, via distribution lines 21, power to home appliances (for example, lighting equipment and air conditioner) 5 and a power conditioning system (PCS) 104 connected to the distribution switchboard 20. The distribution switchboard 20 also includes a measuring device for measuring the electric energy of each feeder.

The home 100 includes electrical apparatuses. The electrical apparatuses are apparatuses connectable to the distribution lines 21 in the home 100. An apparatus (load) that consumes power, an apparatus that generates power, an apparatus that consumes and generates power, and a storage battery correspond to the electrical apparatuses. That is, the home appliances 5, a PV unit 101, a storage battery 102, and a fuel cell (to be referred to as an FC unit hereinafter) 103 correspond to the electrical apparatuses. The electrical apparatuses are detachably connected to the distribution lines 21 via sockets (not shown) and then connected to the distribution switchboard 20 via the distribution lines 21.

The PV unit 101 is installed on the roof or wall of the home 100. The PV unit 101 is an energy generation apparatus that produces electric energy from renewable energy. A wind power generation system or the like also belongs to the category of energy generation apparatuses. If surplus power derived from renewable energy occurs, the surplus power can be sold to the power grid 6.

The FC unit 103 is a power generation unit for producing power from city gas or LP gas (liquefied propane gas) that is nonrenewable energy. Since the power generated by the FC unit 103 is prohibited from flowing back to the power grid 6, surplus power may occur. The surplus power can charge the storage battery 102.

The PCS 104 includes a converter (not shown). The PCS 104 causes the converter to convert AC power from the distribution lines 21 into DC power and supplies it to the storage battery 102. The PCS 104 also includes an inverter (not shown). The PCS 104 causes the inverter to convert DC power supplied from the PV unit 101, the storage battery 102, or the FC unit 103 into AC power and supplies it to the distribution lines 21. The electrical apparatuses can thus receive power supplied from the PV unit 101, the storage battery 102, and the FC unit 103 via the PCS 104.

That is, the PCS 104 has the function of a power converter configured to transfer energy between the distribution lines 21 and the PV unit 101, the storage battery 102, and the FC unit 103. The PCS 104 also has a function of controlling to stably operate the storage battery 102 and the FC unit 103. Note that FIG. 2 illustrates a form in which the PCS 104 is commonly connected to the PV unit 101, the storage battery 102, and the FC unit 103. In place of this form, the PV unit 101, the storage battery 102, and the FC unit 103 may individually have the function of the PCS.

A home network 25 such as a LAN (Local Area Network) is formed in the home 100. The home gateway 7 is detachably connected to both the home network 25 and an IP network 200 via a connector (not shown) or the like. The home gateway 7 can thus communicate with the watt-hour meter 19, the distribution switchboard 20, the PCS 104, and the home appliances 5 connected to the home network 25. Note that the home network 25 is either wireless or wired.

The home gateway 7 includes a communication unit 7a as a processing function according to the embodiment. The communication unit 7a is a network interface that transmits various kinds of data to the cloud 300 and receives various kinds of data from the cloud 300.

The home gateway 7 is a computer including a CPU (Central Processing Unit) and a memory (neither are shown). The memory stores programs configured to control the computer. The programs include instructions to communicate with the cloud 300, request the cloud 300 to calculate the operation schedules of the home appliances 5, the storage battery 102, and the FC unit 103, and reflect a customer's intention on system control. The CPU functions based on various kinds of programs, thereby implementing various functions of the home gateway 7.

That is, the home gateway 7 transmits various kinds of data to the cloud 300 and receives various kinds of data from the cloud 300. The home gateway 7 is a client apparatus capable of communicating with the cloud 300 and the server computer SV. Various kinds of data transmitted from the home gateway 7 include request signals to request the cloud 300 to do various kinds of operations.

**EP 2 953 230 A1**

The home gateway 7 is connected to a terminal 105 via a wired or wireless network. The functions of a local server can also be implemented by the home gateway 7 and the terminal 105. The terminal 105 can be, for example, a general-purpose portable information device, personal computer, or tablet terminal as well as a so-called touch panel.

The terminal 105 notifies the customer (user) of the operation state and power consumption of each of the home appliances 5, the PV unit 101, the storage battery 102, and the FC unit 103 by, for example, displaying them on an LCD (Liquid Crystal Display) or using voice guidance. The terminal 105 includes an operation panel and accepts various kinds of operations and settings input by the customer.

The IP network 200 is, for example, the so-called Internet or a VPN (Virtual Private Network) of a system vendor. The home gateway 7 can communicate with the server computer SV or send/receive data to/from the database DB via the IP network 200. Note that the IP network 200 can include a wireless or wired communication infrastructure to form a bidirectional communication environment between the home gateway 7 and the cloud 300.

The cloud 300 includes a collection unit 300a, an estimation unit 300b, a calculation unit 300c, and a control unit 300d. The database DB of the cloud 300 stores a control target model 300g of the storage battery 102 and the FC unit 103 and various kinds of data 300h. The collection unit 300a, the estimation unit 300b, the calculation unit 300c, and the control unit 300d are functional objects distributively arranged in the single server computer SV or the cloud 300. How to implement these functional objects in the system can easily be understood by those skilled in the art.

For example, the collection unit 300a, the estimation unit 300b, the calculation unit 300c, and the control unit 300d are implemented as programs to be executed by the server computer SV of the cloud 300. The programs can be executed by either a single computer or a system including a plurality of computers. When the instructions described in the programs are executed, various functions according to the embodiment are implemented.

The collection unit 300a periodically or aperiodically acquires various kinds of data concerning the home appliances 5, the PV unit 101, the storage battery 102, and the FC unit 103 of each home 100 from the home gateway 7 of the home 100. The collection unit 300a also acquires, from the terminal 105, the user's operation history and the like of the terminal 105. Note that the collection unit 300a and the terminal 105 can also directly communicate via a communication line 40.

The acquired data are held in the database DB as the data 300h. The data 300h include the power demand of each home 100, the power consumption of each household electric appliance 5, a hot water supply, an operation state, the charged battery level and the amount of charged/discharged power of the storage battery 102, and the power generation amount of the PV unit 101. Meteorological data or the like provided by the Meteorological Agency can also be included in the data 300h.

The estimation unit 300b estimates the energy demand (power demand or hot water demand) and the energy generation amount (power generation amount) in the home 100 based on the data 300h acquired by the collection unit 300a. The estimation unit 300b estimates, for example, the power demand, hot water demand, PV power generation amount, and the like of the home 100.

The calculation unit 300c calculates the operation schedules of the storage battery 102 and the FC unit 103 based on the control target model 300g and the estimated energy demand and energy generation amount. That is, the calculation unit 300c calculates, for example, the charge and discharge schedule of the storage battery 102 or the power generation schedule (FC power generation schedule) of the FC unit 103 based on, for example, the power demand, hot water demand, and PV power generation amount.

That is, the calculation unit 300c decides the operation schedules of the storage battery 102 and the FC unit 103 so as to optimize the energy balance in the home 100. This processing is called optimal scheduling. The energy balance is, for example, the heat/electricity balance. The heat/electricity balance is an amount evaluated by the balance between the cost of electric energy consumed by the home appliances 5 and the sales price of energy mainly generated by the PV unit 101. The calculated time-series operation schedules of the storage battery 102 and the FC unit 103 are stored in the database DB.

The control unit 300d generates control information used to control the storage battery 102 and the FC unit 103 based on the calculated operation schedules. That is, the control unit 300d generates operation designation and stop designation, output target values, and the like for charging and discharging and the operation of the storage battery 102 or power generation of the FC unit 103 based on the result of optimal scheduling. These pieces of control information are transmitted to the terminal 105 or the home gateway 7 via the communication line 40.

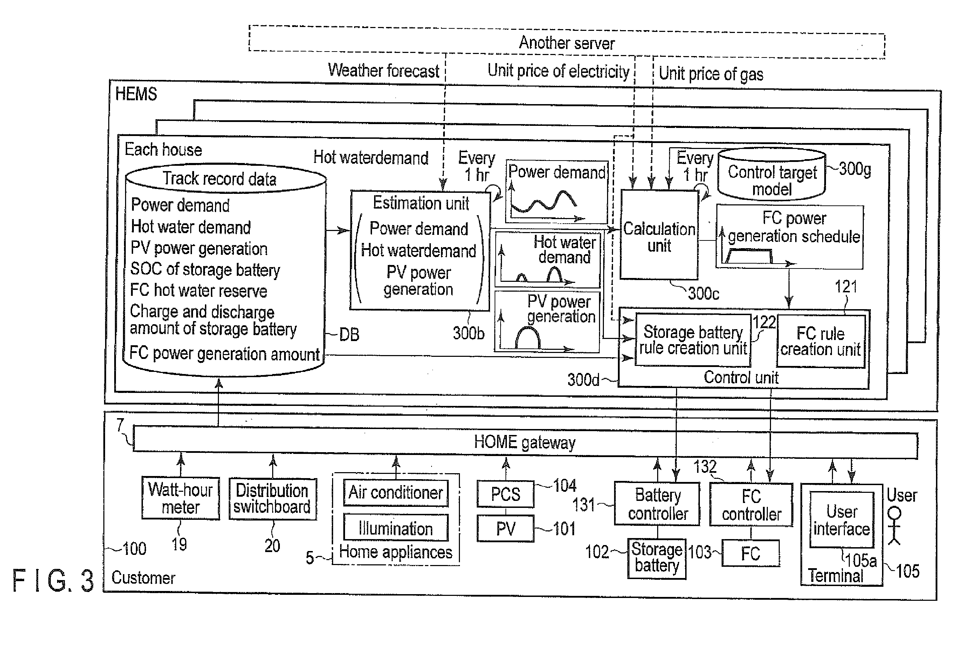

The terminal 105 of the home 100 includes an interface unit (user interface 105a shown in FIG. 3) configured to reflect the customer's intention on control of the home appliances 5 based on the control information transmitted from the control unit 300d. The user interface 105a includes a display device to display the charge and discharge schedule of the storage battery 102 or the power generation schedule of the FC unit 103. The customer can see the contents displayed on the display device and confirm the schedule or select permission or rejection of execution of the displayed schedule. The customer's intention can thus be reflected on schedule execution.

The customer can also input, via the user interface 105a, designation (command) to request the cloud 300 to recalculate the schedule or give the system information necessary for the recalculation. A plurality of embodiments will be described below based on the above-described arrangement.

[First Embodiment]

FIG. 3 is a functional block diagram showing the main part of a HEMS according to the first embodiment. Referring to FIG. 3, a home gateway 7 periodically or aperiodically transmits track record data such as the power demand, hot water demand, and PV power generation amount of a home 100, the SOC (State Of Charge) of a storage battery 102, the hot water reserve of an FC unit 103, the charge and discharge amount of the storage battery 102, and the hot water reserve of the FC unit 103 to a HEMS (cloud 300). These data are accumulated in a database DB of the HEMS. The operation history of a terminal 105 and the like of the customer are also transmitted to the cloud 300. The track record data are measured values representing realistic values and are discriminated from estimated values.

An estimation unit 300b estimates the power demand, hot water demand, and PV power generation amount for every predetermined time of a day of interest using the data of the collected power demand, hot water demand, and PV power generation amount, meteorological data (weather forecast), and the like. The meteorological data is distributed from another server (for example, Meteorological Agency) at several timings a day. The estimation calculation may be executed in synchronism with the timing of meteorological data reception.

A calculation unit 300c executes optimal scheduling concerning operation control of the storage battery 102 and the FC unit 103 based on the energy demand calculated for every predetermined time by estimation calculation, the energy supply, the unit energy price, a control target model 300g, and the like. By the optimal scheduling, for example, the charge and discharge schedule of the storage battery 102 and the power generation schedule of the FC unit 103 can be obtained.

The estimation unit 300b, the calculation unit 300c, and a control unit 300d can be implemented as, for example, functional objects dedicated to each customer. That is, the functions of the estimation unit 300b, the calculation unit 300c, and the control unit 300d can be provided for each customer. Such a form can be obtained by, for example, creating a plurality of threads in the program execution process. This form is advantageous because, for example, security can easily be retained.

Alternatively, the estimation unit 300b, the calculation unit 300c, and the control unit 300d can be implemented as functional objects provided for a plurality of customers. That is, the operations by the estimation unit 300b, the calculation unit 300c, and the control unit 300d can be executed for a group of a plurality of customers. This form is advantageous because, for example, the calculation resource can be saved.

The control unit 300d creates a discharge strategy capable of maximizing the balance obtained by subtracting the electricity purchase loss from the electricity selling profit using the push up effect of a sold electricity amount due to discharging the storage battery 102. The discharge strategy is created based on the power demand estimated value, the estimated value of the PV power generation amount, the power generation schedule of the FC unit 103, and the like. The control unit 300d includes an FC rule creation unit 121 and a storage battery rule creation unit 122 as the processing functions according to this embodiment.

The FC rule creation unit 121 generates an activation/stop command and a power generation amount target value (control rule) according to the power generation schedule created by the calculation unit 300c. An FC controller 132 is notified of this control rule via a communication line 40. The FC controller 132 controls the FC unit 103 based on the notified control rule, the power demand (measured value), the PV power generation amount (measured value), the power generation schedule of the FC unit 103, and the like.

Activation/stop of the FC unit 103 is expensive and time-consuming. Time is also required from a change of the power generation amount target value to implementation of it. For this reason, the power generation amount target value is preferably fixed to some extent. In addition, the number of times of activation/stop of the FC unit 103 is preferably as small as possible.

The storage battery rule creation unit 122 creates a control rule to control the storage battery 102. The control rule is sent to the battery controller 131 via the communication line 40. The battery controller 131 controls the charge and discharge amount or the charge and discharge timing of the storage battery 102 based on the control rule, the power demand (measured value), the PV power generation amount (measured value), and the like.

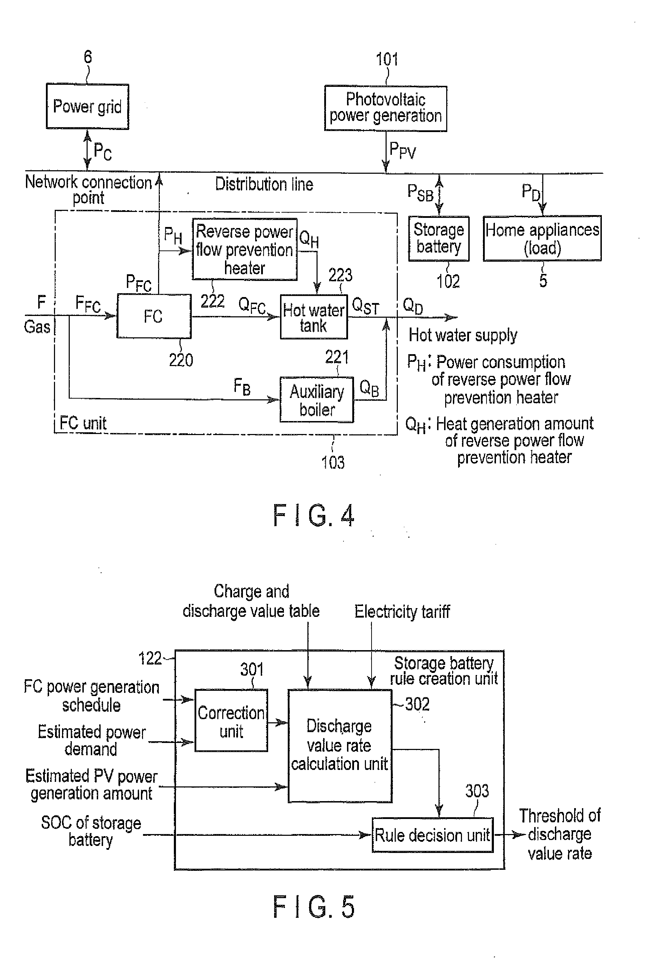

FIG. 4 is a block diagram for explaining the control target model 300g. The control target model 300g includes the power grid 6, the FC unit 103, the storage battery 102, the PV unit 101, and a load (household electric appliance) 205 as constituent elements. The FC unit 103 includes an FC main body 220, an auxiliary boiler 221, a reverse power flow prevention heater 222, and a hot water tank 223. The variables in FIG. 4 are shown in Table 1.

[Table 1]

t:             Time [h]

$P_C(t)$:      Electricity purchased from power grid 6 [kW] (negative value indicates sold electricity)

(continued)

| | |
|---|---|
| $P_{FC}(t)$: | Power generation amount of FC main body 220 [kW] |
| $P_H(t)$: | Power consumption of reverse power flow prevention heater 222 [kW] |
| $P_{PV}(t)$: | Power generation amount of PV system 101 [kW] |
| $P_D(t)$: | Power demand of home 100 [kW] |
| $P_{SB}(t)$: | Discharged power of storage battery 102 [kW] (negative value indicates charged power) |
| $Q_D(t)$: | Hot water demand [kcal/h] |
| $Q_{FC}(t)$: | Exhaust heat amount of FC main body 220 [kcal/h] |
| $Q_{ST}(t)$: | Hot water supply from hot water tank 223 [kcal/h] |
| $Q_B(t)$: | Hot water supply from auxiliary boiler 221 [kcal/h] |
| $Q_H(t)$: | Heat generation amount of reverse power flow prevention heater 222 [kcal/h] |
| $F(t)$: | Gas supply [kcal/h] |
| $F_{FC}(t)$: | Gas supply amount to FC unit 103 [kcal/h] |
| $F_B(t)$: | Gas supply amount to auxiliary boiler 221 [kcal/h] |
| $S(t)$: | Remaining battery level of storage battery 102 [kWh] |
| $H(t)$: | Hot water reserve of hot water tank 223 [kcal] |

The control target model 300g represents the input/output relationship between the constituent elements and the relational expressions of the input variables or output variables between the constituent elements. For example, the control target model 300g can be expressed by following equations (1) to (9).

[Mathematical 1]

$$F(t) = F_{FC}(t) + F_B(t) \tag{1}$$

$$P_{FC}(t) = aF_{FC}(t) + b \tag{2}$$

$$Q_{FC}(t) = \alpha F_{FC}(t) + \beta \tag{3}$$

a, b, $\alpha$, $\beta$:Coefficients determined from efficiency of FC

$$r\,H(t-1) + Q_{FC}(t) + Q_H(t) = H(t) + Q_{ST}(t) \tag{4}$$

r:Hot water storage efficiency

$$H_{min} \leqq H(t) \leqq H_{max} \tag{5}$$

$H_{min}$, $H_{max}$: Constraints of capacity of hot water tank 223

$$P_C(t) + P_{PV}(t) + P_{FC}(t) + P_{SB}(t) = P_D(t) + P_H(t) \tag{6}$$

$$P_{FC}(t) + P_{SB}(t) \leqq P_D(t) + P_H(t) \tag{7}$$

$$P_H(t) \leqq P_{FC}(t) \tag{8}$$

$$S_{min} \leqq S(t) \leqq S_{max} \qquad\qquad (9)$$

$S_{min}$, $S_{max}$ : Constraints of capacity of storage battery 102

In equation (1), a gas supply F(t) is indicated as the sum of a supply $F_{FC}(t)$ to the FC main body 220 and a supply $F_B(t)$ to the auxiliary boiler. The FC main body 220 is assumed to generate power in an amount $P_{FC}(t)$ with respect to the gas supply $F_{FC}(t)$ and exhausts heat in an amount $Q_{FC}(t)$. The input and output characteristics of the FC main body 220 are approximately expressed by equations (2) and (3). Equations (2) and (3) represent the relationship between the gas supply, the power generation amount, and the exhaust heat amount of the FC main body 220.

The reverse power flow prevention heater 222 converts surplus power $P_H(t)$ into heat in an amount $Q_H(t)$ so as to consume it. That is, the reverse power flow prevention heater 222 discards the heat in the amount $Q_H(t)$, thereby controlling to prevent the surplus power from flowing back to the power grid 6. The auxiliary boiler 221 supplies hot water in an amount $Q_B(t)$ to cover the shortfall in a hot water supply $Q_{ST}(t)$ from the hot water tank 223 out of the hot water demand.

As indicated by equation (4), a hot water reserve H(t) of the hot water tank 223 increases/decreases in accordance with the exhaust heat $Q_{FC}(t)$ of the FC main body 220, the heat generation amount $Q_H(t)$ of the reverse power flow prevention heater 222, and the hot water supply $Q_{ST}(t)$. Note that the heat amount lost by heat dissipation or the like is expressed by a hot water storage efficiency r. Inequality (5) represents the constraint of the capacity of the hot water tank 223. The storage battery 102 can be expressed as a model that increases/decreases a remaining battery level S(t) based on charged/discharged power $P_{SB}(t)$.

Equation (6) represents the power demand and supply balance. $P_D(t)$ is the power demand of the home 100, $P_C(t)$ is the purchased or sold electricity, and $P_{PV}(t)$ is the power generation amount of the PV 101. Inequalities (7) and (8) represent constraints that the reverse power flow from the FC main body 220 and the storage battery 102 is prohibited. Inequality (9) represents the constraint of the capacity of the storage battery 102.

The calculation unit 300c (FIGS. 2 and 3) obtains the schedule of the power generation $P_{FC}(t)$ of the FC unit 103 and the schedule of the charge and discharge $P_{SB}(t)$ of the storage battery 102 such that the heat/electricity balance (energy cost) is minimized under the above-described conditions. The optimization operation is done using the power demand, hot water demand, PV power generation amount, unit prices of electricity and gas, purchase price of electricity, and the like. As the optimization algorithm, for example, a genetic algorithm is usable.

FIG. 5 is a functional block diagram showing an example of the storage battery rule creation unit 122 shown in FIG. 3. The storage battery rule creation unit 122 includes a correction unit 301, a discharge value rate calculation unit 302, and a rule decision unit 303. The storage battery rule creation unit 122 outputs a discharge value rate threshold serving as a set value for charge and discharge control of the storage battery 102.

The correction unit 301 acquires the FC power generation schedule from the calculation unit 300c and acquires a power demand estimated value from the estimation unit 300b. The correction unit 301 corrects the acquired power demand estimated value by the power generation amount of the FC unit 103 based on the FC power generation schedule.

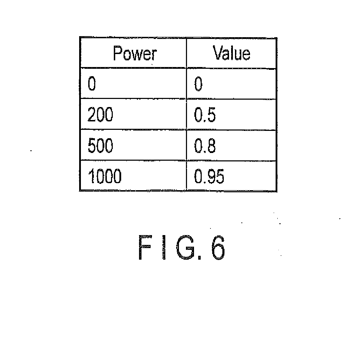

The discharge value rate calculation unit 302 acquires a charge and discharge value table (FIG. 6) from, for example, the database DB, acquires an electricity tariff from, for example, another server in the cloud 300, and acquires a PV power generation amount estimated value from the estimation unit 300b.

The discharge value rate calculation unit 302 calculates the discharge value rate (estimated value) based on the charge and discharge value table (FIG. 6), the electricity tariff, the power demand estimated value, and the PV power generation estimated value. The discharge value rate is transferred to the rule decision unit 303.

The discharge value rate is a value obtained by dividing the discharge value by the discharge amount of the storage battery 102. The discharge value rate can have two values, estimated value and actual value. The estimated value of the discharge value rate is calculated by dividing the estimated value of the discharge value by the discharge amount. The actual value of the discharge value rate is calculated by dividing the actual value of the discharge value by the discharge amount.

The estimated value of the discharge value is expressed as the sum of the cancel amount of the electricity purchase loss when the corrected power demand estimated value is covered by discharge of the storage battery 102 and the electricity selling profit based on the estimated value of the PV power generation amount. Both the discharge value and the discharge value rate are calculated for every unit period (1 hr or 1 min in one day) within a reference period (for example, one day).

FIG. 6 is a table showing an example of the charge and discharge value table of the storage battery 102. The charge and discharge value table associates the value of power accumulated in (or extracted from) the storage battery 102 with the efficiency of accumulating (or extracting) power of such value. FIG. 6 shows that the charge or discharge value of power of, for example, 500 watt [W] is 0.8. Values that do not exist in the table of FIG. 6 can be obtained by interpolation.

Referring back to FIG. 5, the rule decision unit 303 acquires the SOC of the storage battery 102 from the database DB. The rule decision unit 303 decides the discharge rule of the storage battery 102 based on the discharge value rate and the SOC of the storage battery.

More specifically, the rule decision unit 303 adds the corrected value of the power demand estimated value in descending order of the estimated value of the discharge value rate in the unit period. A unit period in which the sum becomes equal to or larger than the total discharge amount of the storage battery 102 is specified. The estimated value of the discharge value rate in the specified unit period is the threshold serving as the discharge rule.

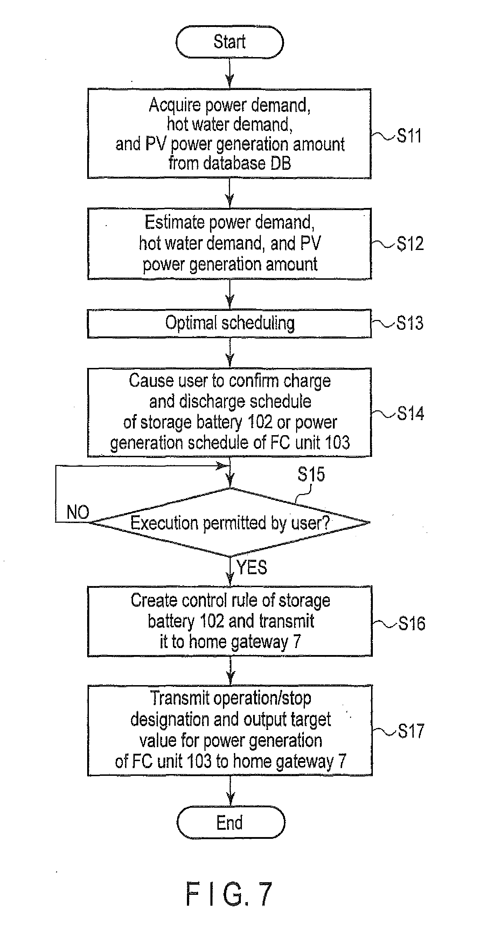

FIG. 7 is a flowchart showing an example of a processing procedure according to the first embodiment. An estimated power demand, estimated hot water demand, estimated PV power generation amount, and the like are necessary for the optimization operation. The optimization operation is executed in synchronism with the timings of estimation calculation which is executed several times a day.

Referring to FIG. 7, the estimation unit 300b acquires the power demand, hot water demand, and PV power generation amount for every predetermined time from the database DB (step S11). In this step, past data, for example, data of the same day of a year earlier may be acquired in addition to the current data. Next, the estimation unit 300b estimates the power demand, hot water demand, and PV power generation amount for every predetermined time (step S12).

The calculation unit 300c calculates the schedule of the power generation amount of the FC unit 103 and the schedule of the charge and discharge amount of the storage battery 102 so as to minimize the heat/electricity balance (step S13). The calculated schedules are stored in the database DB.

Next, the system transmits a message signal representing the schedule of the charge and discharge amount of the storage battery 102 or the schedule of the power generation amount of the FC unit 103 to the terminal 105 via an IP network 200. The terminal 105 interprets the message signal and displays the various schedules on the interface (step S14). The routine from the message signal transmission to the display is executed periodically or in response to a request from the user.

The cloud 300 waits for arrival of a permission message signal representing that execution of the device operation schedule is permitted by the user (step S15). When the execution is permitted, the storage battery rule creation unit 122 creates the control rule to control the storage battery 102, and transmits the control rule to the home gateway 7 of the home 100 via the IP network 200 (step S16). The control rule includes, for example, operation/stop designation, an output target value, and the like for charge and discharge of the storage battery 102.

The FC rule creation unit 121 acquires the FC power generation schedule, and transmits an operation/stop time, an output target value, and the like for power generation of the FC unit 103 to the home gateway 7 of the home 100 via the IP network 200 (step S17). The above-described procedure is repeated at the time interval of scheduling.

In the flowchart of FIG. 7, the estimation procedure of step S12 and the optimal scheduling of step S13 are combined. This makes it possible to create a demand/supply plan such as the power generation schedule of the FC unit 103 or the charge and discharge schedule of the storage battery 102 in consideration of the overall balance in accordance with the estimated power demand, estimated hot water demand, and estimated PV power generation amount over a relatively long period corresponding to about one day. It is therefore possible to avoid a case in which the storage battery 102 is fully charged, and the surplus power of the FC unit 103 cannot be supplied or a case in which the remaining battery level is too low when the storage battery 102 should be discharged.

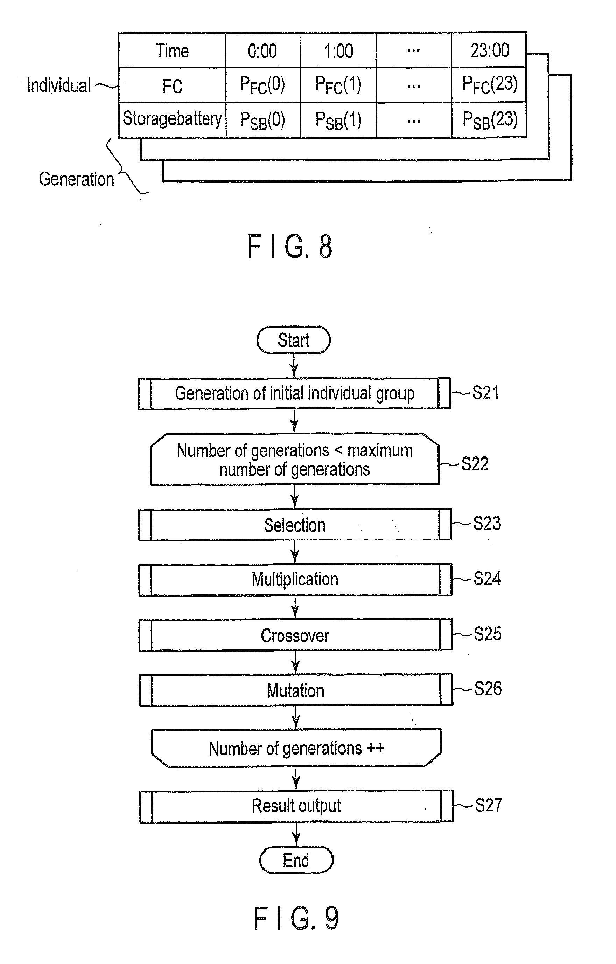

FIG. 8 is a conceptual view showing an example of the gene design of a genetic algorithm according to the embodiment. In the embodiment, the power generation amount $P_{FC}(t)$ of the FC unit 103 and the charged/discharged power $P_{SB}(t)$ of the storage battery 102 are incorporated into genes. The operation schedules of the storage battery 102 and the FC unit 103 of a day are defined as individuals, and a generation includes a plurality of individuals.

Equation (10) represents a fitness Fit to be maximized. The operation schedule can be calculated by performing optimization using Fit as an objective function. Equation (11) represents a heat/electricity balance C. Equation (12) represents a cost $g(P_{FC}(t), P_{SB}(t))$ of discontinuity of device operation. The sum from $t = 0$ to $t = 23$ in the heat/electricity balance C is equivalent to obtaining the sum in 24 hrs.

[Mathematical 2]

$$\text{Fit} = \frac{1}{f(C) + g(P_{FC}(t), P_{SB}(t))} \qquad (10)$$

f (C) :Monotone increasing function having C as variable >0

$$C = \sum_{t=0}^{23} \left( c_F F(t) + c_E(t) P_C(t) \right) \qquad (11)$$

$$C_E(t) \; : \; \begin{cases} \text{Unit price of electricity [yen/kWh]} \quad P_C(t) > 0 \\[2em] \text{Unit price of PV sales [yen/kWh]} \quad P_C(t) \leqq 0 \end{cases}$$

$C_F$ : Unit price of gas [yen/kcal]

$$g(P_{FC}(t), P_{SB}(t)) = w_1 \left| P_{FC}(t) - P_{FC}(t-1) \right| + w_2 \left| P_{SB}(t) - P_{SB}(t-1) \right|$$

$$w_1, \; w_2 : \text{Weights} \qquad (12)$$

The fitness Fit represented by equation (10) is the reciprocal of the sum of a monotone increasing function f(C) using the heat/electricity balance C per day as a variable and the cost $g(P_{FC}(t), P_{SB}(t))$ of discontinuity of device operation. The heat/electricity balance C may be negative when the PV power generation amount largely exceeds the power demand of the home 100. Hence, to make the decrease in the heat/electricity balance C correspond to the increase in the fitness Fit, the form of equation (10) is employed. In the first embodiment, the function f(C) > 0 is used.

The power demand, hot water demand, PV power generation amount, solar water heating amount, unit price of electricity, unit price of gas, and PV purchase price are given to the above-described equations, and gene manipulations such as mutation, crossover, and selection are repeated to maximize Fit. It is possible to obtain, by these operations, a series of power generation amounts $P_{FC}(t)$ of the FC unit 103 and a series of charged/discharged powers $P_{SB}(t)$ of the storage battery 102, which can maximize the heat/electricity balance C.

The power demand, hot water demand, PV power generation amount, unit price of electricity, unit price of gas, and PV purchase price are given to the above-described equations, and gene manipulations such as mutation, crossover, and selection are repeated to maximize Fit. It is possible to obtain, by these operations, a series of power generation amounts $P_{FC}(t)$ of the FC unit 103 and a series of charged/discharged powers $P_{SB}(t)$ of the storage battery 102, which can maximize the heat/electricity balance C.

FIG. 9 is a flowchart showing an example of the procedure of the optimization operation according to the first embodiment. A genetic algorithm will be exemplified as the optimization algorithm. The processing procedure based on the genetic algorithm will be described below.

(Step S21) Generation of Initial Individual Group

In this step, the calculation unit 300c generates n initial individuals. The genes of the individuals are, for example, the operation/stop of the FC unit 103, the power generation amount of the FC unit 103, and the charged/discharged power of the storage battery 102 at a time t. Gene sequences corresponding to, for example, one day (24 hrs) can be provided. Each individual is a set of gene sequences of the FC unit 103 and the storage battery 102. The bits of the genes of each individual that do not meet the constraints are inverted, thereby modifying the individual to meet the constraints.

(Step S22)

The loop of step S22 indicates processing of repeating the processes of steps S23 to S26. When this loop is repeated a predetermined number of times, the algorithm operation ends. In addition, the fitness of each individual and the average fitness of the generation are calculated. The average fitness of the generation is compared with the average fitness of two previous generations. If the comparison result is equal to or smaller than an arbitrarily set value ε, the algorithm operation ends.

(Step S23) Selection

In this step, the calculation unit 300c discards individuals that do not meet the constraints. Hence, the individuals that do not meet the constraints are selected. If there are individuals in a predetermined number or more, individuals whose fitness is poor (low) are discarded to maintain the number of individuals below the predetermined number.

(Step S24) Multiplication

In this step, if the number of individuals is smaller than a predefined number of individuals, the calculation unit 300c multiplies an individual having the best fitness.

(Step S25) Crossover

The calculation unit 300c performs pairing at random. The pairing is performed as much as the percentage (crossover rate) to the total number of individuals. A gene locus is selected at random for each pair, and one-point crossover is performed.

(Step S26) Mutation

In this step, the calculation unit 300c randomly selects individuals of a predetermined percentage (mutation rate) of the total number of individuals and inverts the bits of the genes of arbitrary (randomly decided) gene loci of each individual.

The procedure of (step S23) to (step S26) is repeated until a condition given by number of generations < maximum number of generations is met while incrementing the number of generations (loop of step S22). If this condition is met, the calculation unit 300c outputs the result (step S27), and ends the calculation procedure.

As indicated by equations (10) and (11), the function representing the fitness Fit to be maximized includes the gas rate necessary for the operation of the FC unit 103. Hence, a schedule that wastefully operates the reverse power flow prevention heater 222 is selected in the process of optimization calculation under a condition that a feasible solution exists.

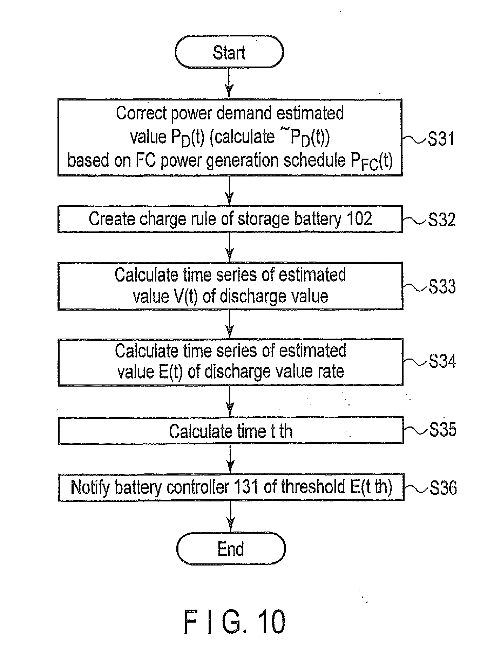

FIG. 10 is a flowchart showing an example of the processing procedure of discharge rule creation of the storage battery 102. The control unit 300d corrects the time series of the power demand estimated value $P_D(t)$ based on the time series $P_{FC}(t)$ of the FC power generation amount shown in the FC power generation schedule (step S31). That is, a corrected power demand estimated value $\sim P_D(t)$ is obtained by equation (13). The tilde ($\sim$) indicates a corrected value.

t is a variable representing a time in one day. For example, when one day (reference period) is expressed as a set of minutes (unit periods), t takes a value of 0 to 1439. Note that as indicated by equation (13), at a time at which the FC power generation amount exceeds the power demand estimated value, the corrected power demand estimated value $\sim P_D(t)$ is set to zero (0).

[Mathematical 3]

$$\sim P_D(t) = MAX(P_D(t) - P_{FC}(t), 0) \qquad (13)$$

The control unit 300d creates the charge rule of the storage battery 102 (step S32). The electricity purchase loss can be minimized by creating such a charge rule that completes charging in a time as short as possible in a time zone where the electricity rate is low. Let Te be the end time of the time zone where the electricity rate is minimum. The control unit 300d generates a schedule that fully charges the storage battery 102 at the time Te.

Assume that the storage battery 102 before charging is empty (SOC = 0), the battery capacity is 6 kWh, and the chargeable power is 2 kW. In addition, the time zone where the electricity rate is minimum is assumed to be, for example, a time zone from 23:00 of the previous day to 7:00 of the day of interest. Under this condition, a schedule to charge the storage battery by 2 kW during the period of 3:00 to 6:00 can be created.

The control unit 300d calculates the time series of a discharge value estimated value V(t) based on equations (11) to (14) (step S33). In the first embodiment, a time series from the time Te to a time Ts at which the time zone of the minimum electricity rate starts is calculated. That is, the value V(t) in every minute as the unit period is calculated.

[Mathematical 4]

$$DovPV(t) = {\sim}P_D(t) - P_{PV}(t) \qquad ({\sim}P_D(t) > P_{PV}(t))$$

$$= 0 \qquad ({\sim}P_D(t) \leqq P_{PV}(t))$$

$$\tag{14}$$

$$PVpush(t) = min(P_{PV}(t), {\sim}P_D(t)) \tag{15}$$

$$V(t) = PVpush(t) \times PRsell + DovPV(t) \times PR(t) \tag{16}$$

$D_{OV}PV(t)$ in equation (14) is a series that is the difference between the power demand estimated value (corrected value) and the PV power generation amount when the former exceeds the latter or 0 when the former is equal to or smaller than the latter.

PVpush(t) in equation (15) is the smaller one of $P_{PV}(t)$ and ${\sim}P_D(t)$. PVpush(t) is the series of the power generation amount capable of pushing up the sold PV power amount by covering the power demand by discharge of the storage battery 102.

V(t) in equation (16) is a efficiency, that is, a discharge value obtained by discharge of ${\sim}PD(t)$ at that time. PRsell is the sales price of PV power, and PR(t) is the electricity rate. The first term of the right-hand side represents the pushed-up sales price of PV power, and indicates the estimated value of the electricity selling profit based on the power generation amount of the PV unit 101. The second term of the right-hand side indicates the cancel amount of the electricity purchase loss when the power demand estimated value (corrected value) is covered by discharge of the storage battery 102.

The control unit 300d calculates the time series of the estimated value E(t) of the discharge value rate based on equation (17) (step S34). That is, E(t) is a value obtained by dividing the discharge value V(t) by the discharge amount.
[Mathematical 5]

$$E(t) = V(t)/f({\sim}P_D(t)) \tag{17}$$

Function $f({\sim}P_D(t))$ of equation (17) is a function representing the electric energy extracted from the storage battery 102 to obtain the discharge amount ${\sim}P_D(t)$. For example, when the discharge value with respect to 1 kW is 95%, f(1 kW) = 1.052 kW. The value after conversion by the function f is obtained by the charge and discharge value table (FIG. 6). Note that for the sake of simplicity, the denominator of the right-hand side of equation (17) may be replaced with the corrected power demand estimated value ${\sim}P_D(t)$.

Next, the control unit 300d calculates a time tth by a method to be described below (step S35). In this step, the control unit 300d rearranges the time indices t in descending order of the value E(t). If times t with the same value E(t) exist, the time t of larger ${\sim}P_D(t)$ is ranked high.

The control unit 300d accumulates ${\sim}P_D(t)$ in the order of rearranged t. That is, ${\sim}P_D(t)$ is added in descending order of discharge value rates E(t), and the sum gradually becomes large. The time t at which the sum exceeds the charge amount (chargeable amount) of the storage battery 102 for the first time is defined as the time tth.

That is, the control unit 300d adds ${\sim}P_D(t)$ from the time t in descending order of discharge value rate estimated values E(t), and specifies the time tth at which the sum of ${\sim}P_D(t)$ equals the remaining battery level of the storage battery 102. The discharge value rate E(tth) at the time tth is the threshold used to determine whether to discharge the storage battery 102. The control unit 300d notifies the battery controller 131 of the threshold E(tth) (step S36).

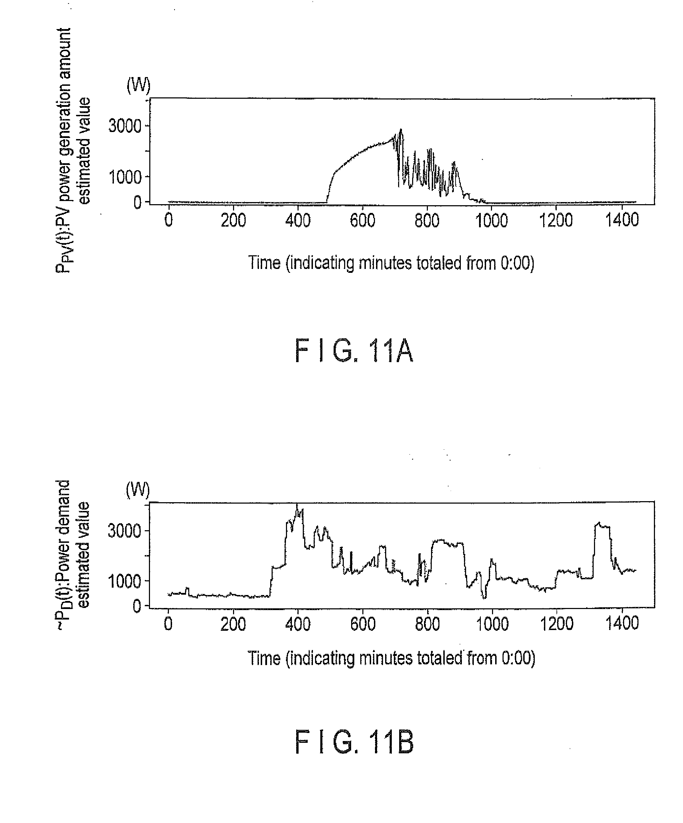

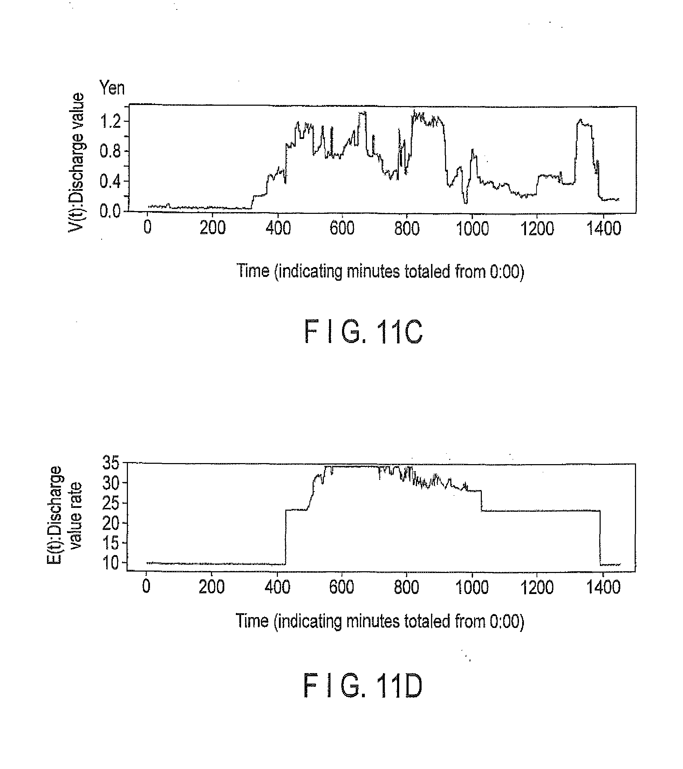

FIG. 11A is a graph showing an example of the PV power generation estimated value $P_{PV}(t)$. FIG. 11B is a graph showing an example of the corrected value ${\sim}P_D(t)$ of the power demand estimated value. FIG. 11C is a graph showing an example of the discharge value V(t). FIG. 11D is a graph showing an example of the discharge value rate estimated value E(t). In the graphs of FIGS. 11A, 11B, 11C, and 11D, the abscissa represents the time indicating the accumulated value of "minutes" totaled from 0:00. The ordinate represents the value in each minute.

The graph of FIG. 11D indicates E(t) from Te (7:00) to Ts (23:00). For example, the value E(t) near 600 min (10:00) is larger than those after 1,000 min (16:40). For this reason, the efficiency is high when the storage battery 102 is discharged near 600 min. That is, this reveals that the balance between the electricity selling profit and the electricity purchase loss can further be improved.

In the example of FIG. 11D, tth calculated in step S35 of FIG. 10 is tth = 667th min. At this time, E(667) = 33.96 (yen/kWh). That is, the threshold is 33.96 yen/kW. Hence, in the first embodiment, the discharge rule of the estimation target day is defined as "if the actual value of the discharge value rate E(t) is 33.96 or more, the storage battery 102 is discharged". The discharge amount is defined as the power demand $\tilde{P}_D(t)$ at every time.

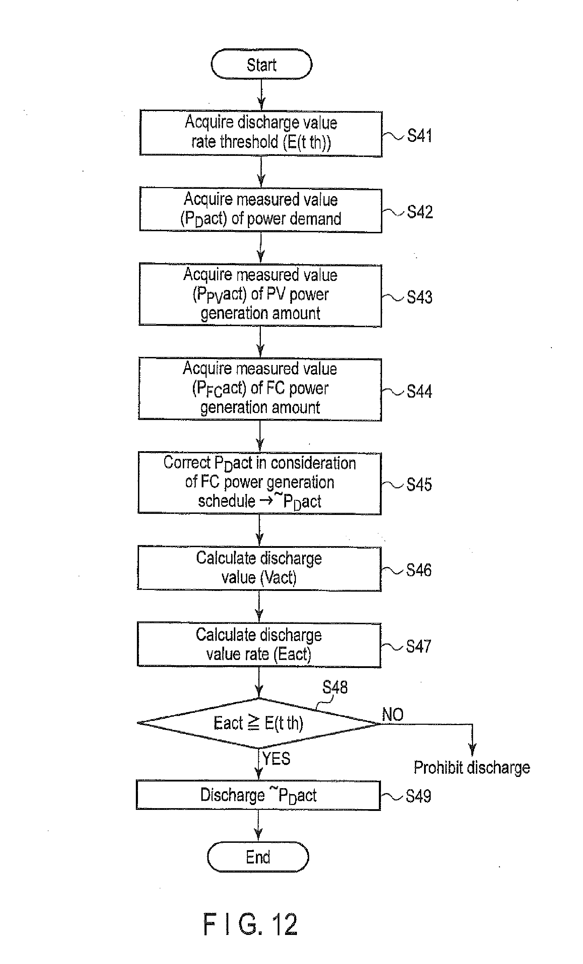

FIG. 12 is a flowchart showing an example of the processing procedure of the battery controller 131. The battery controller 131 turns on/off discharge of the storage battery 102 based on the threshold E(tth). Note that the discharge can adhere to the rule decided in step S32 of FIG. 10, and control of discharge will be explained here.

The battery controller 131 acquires the discharge value rate threshold E(tth) as the discharge rule (step S41). Next, the battery controller 131 acquires a power demand measured value $P_D$act, a PV power generation amount measured value $P_{PV}$act, and an FC power generation amount measured value $P_{FC}$act (steps S42 to S44). $P_D$act is measured by, for example, a sensor connected to a distribution switchboard 20. $P_{PV}$act is measured by, for example, the internal sensor of the PV unit 101. $P_{FC}$act is measured by, for example, a sensor provided in the FC unit 103. The suffix act represents that each amount is a measured actual value.

The battery controller 131 then corrects the power demand $P_D$act by the FC power generation amount $P_{FC}$act based on the FC power generation schedule, thereby obtaining $\tilde{P}_D$act (step S45). As indicated by equation (18), $\tilde{P}_D$act is expressed as a value obtained by subtracting $P_{FC}$act from $P_D$act. However, if this value is negative, that is, if the FC power generation amount exceeds the power demand, $\tilde{P}_D$act is replaced with 0.

[Mathematical 6]

$$\sim\!\!P_D act = MAX(P_D act - \sim\!\!P_{FC} act, \; 0) \qquad (18)$$

Next, the battery controller 131 obtains the discharge value at the current time, that is, an actual value Vact of the discharge value by equations (19) to (21) (step S46).

[Mathematical 7]

$$DovPV(t) = \sim\!\!P_D act - P_{PV} act \qquad (\sim\!\!P_D act > P_{PV} act)$$
$$= 0 \qquad\qquad (\sim\!\!P_D act \leqq P_{PV} act) \quad (19)$$

$$PVpushact = min(P_{PV} act, \; \sim\!\!P_D act) \qquad (20)$$

$$Vact = PVpushact \times PRsell + DovPVact \times PR(Current\ time) \qquad (21)$$

$D_{OV}PV$ in equation (19) is a series that is the difference between the actual value of the corrected power demand and the actual value of the PV power generation amount when the former exceeds the latter or 0 when the former is equal to or smaller than the latter.

PVpushact in equation (20) is the smaller one of $P_{PV}$act and $\tilde{P}_D$act. PVpushact is the series of the power generation amount capable of pushing up the sold PV power amount up by covering the corrected value of the power demand by discharge of the storage battery 102.

Vact in equation (21) is a value obtained by discharge of Dact at the current time. That is, Vact is the actual value of the discharge value.

Next, the battery controller 131 calculates an actual value Eact of the discharge value rate based on equation (22) using Vact and Dact (step S47).

[Mathematical 8]

$$Eact = Vact/f(\sim\!\!P_D act) \qquad (22)$$

That is, Eact is a value obtained by dividing the sum of the cancel amount of the electricity purchase loss when $\tilde{P}_D$act is covered by discharge of the storage battery 102 and the electricity selling profit based on PPVact by a discharge amount considering the efficiency.

When Eact ≥ E(tth), the battery controller 131 gives discharge designation to the storage battery 102 to extract electricity corresponding to $\tilde{P}_D$act. When Eact < E(tth), the battery controller 131 does not discharge the storage battery 102, as discharge at that time has no value.

As described above, according to the first embodiment, the discharge value is calculated as an index capable of evaluating the net electricity purchase profit (electricity selling loss) considering the push up effect. The discharge value rate that is the discharge value per discharge amount is calculated. A discharge strategy capable of maximizing the electricity purchase profit (or minimizing the electricity selling loss) is created based on the discharge value rate.

That is, it is possible to create a discharge rule capable of discharging the storage battery 102 that stores limited power in a time zone with a high discharge value. Hence, according to the first embodiment, the net profit of electricity selling can be maximized.

The discharge rule is given by the threshold E(tth) of the discharge value rate. In the embodiment, whether the storage battery 102 can be discharged is determined based on whether the actual value of the discharge value rate is equal to or larger than the threshold E(tth). This makes it possible to decrease the amount of rules and save the resources necessary for control as compared to an existing technique of on/off-controlling discharge simply based on a time.

It is difficult to estimate the PV power generation amount or the power demand with 100% accuracy. When discharge of the storage battery 102 is controlled by a "schedule" based on a time, discharge may occur at a time with a low discharge value rate, or postponement of discharge may occur at a time with a high discharge value rate. That is, if the operation schedule is created based on only the estimated value, it may be impossible to implement an expected reduction of the heat and electricity cost due to the shift between the estimated value and the actual value.

However, as described above, when control is executed based on the rule "on/off of discharge is determined based on the discharge value rate", a more appropriate discharge strategy can be obtained. That is, in the first embodiment, discharge control is done based on the discharge value that is a completely new index. In addition, whether discharge is possible is decided based on the comparison result between the actual value and the threshold. This makes it possible to implement control that enables the user to expect a reduction of the heat and electricity cost even if the estimated value and the actual value deviate from each other.

Additionally, in the first embodiment, processing of correcting the power demand in the home 100 in consideration of the power generation amount of the FC unit 103 is newly performed. This makes it possible to cooperatively control three new energy devices, the FC unit 103 in addition to the PV unit 101 and the storage battery 102. Hence, the cost can be reduced in consideration of both the electricity rate and the gas rate.

It is therefore possible to provide an energy management system capable of exploiting the characteristic of a fuel cell and advantageously operating a new energy device, an energy management method, a program, and a server.

[Second Embodiment]

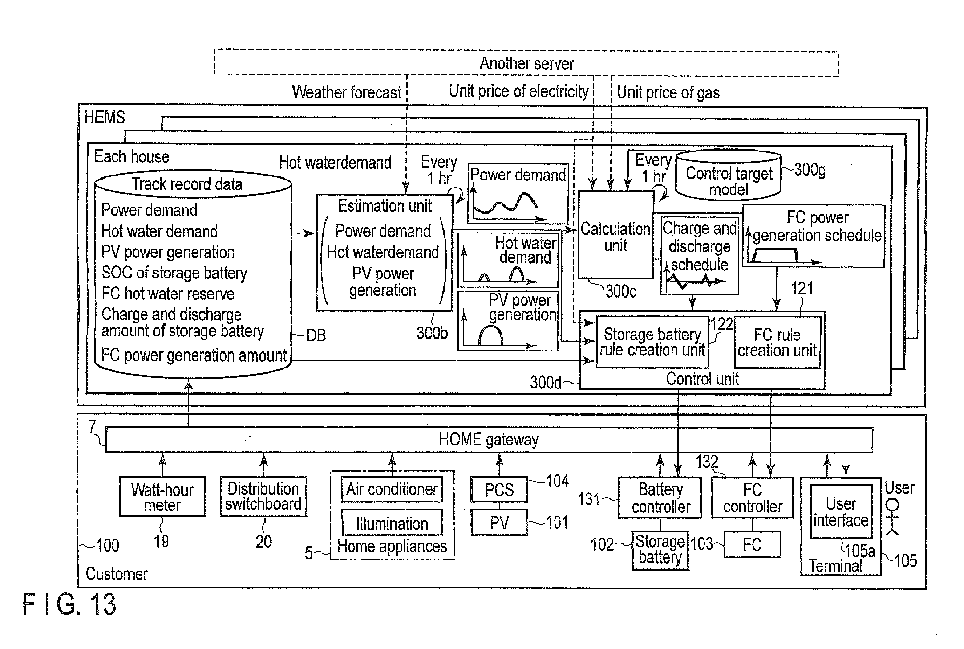

FIG. 13 is a functional block diagram showing the main part of a HEMS according to the second embodiment. The same reference numerals as in FIG. 3 denote the same parts in FIG. 13, and only different parts will be described here. In the first embodiment, the discharge rule of the storage battery 102 is decided in consideration of the FC power generation schedule. In the second embodiment, the discharge rule is decided in consideration of the charge and discharge schedule of a storage battery 102 created by a calculation unit 300c.

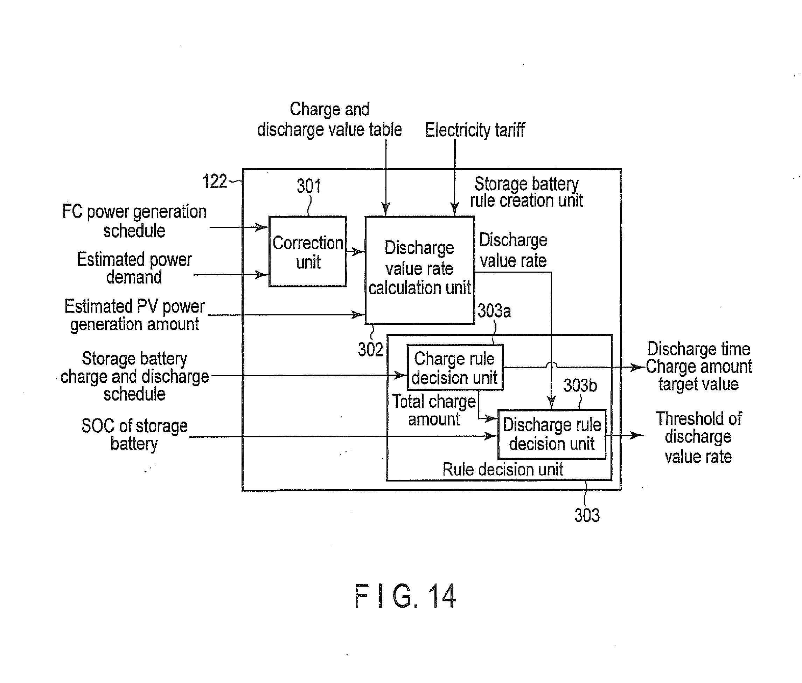

FIG. 14 is a functional block diagram showing an example of a storage battery rule creation unit 122 shown in FIG. 13. Referring to FIG. 14, a rule decision unit 303 includes a charge rule decision unit 303a and a discharge rule decision unit 303b. The charge rule decision unit 303a acquires the value of the charge amount of the storage battery 102 from the charge and discharge schedule of the storage battery 102 and accumulates the value to calculate the total charge amount. The calculated total charge amount is transferred to the discharge rule decision unit 303b. Note that the discharge time and the charge amount target value in the charge and discharge schedule are sent to a home gateway 7.

A discharge rule decision unit 512 acquires the SOC of the storage battery, the discharge value rate, and the total charge amount and calculates the threshold of the discharge value rate. The threshold is sent to the home gateway 7 as the discharge rule of the storage battery 102.

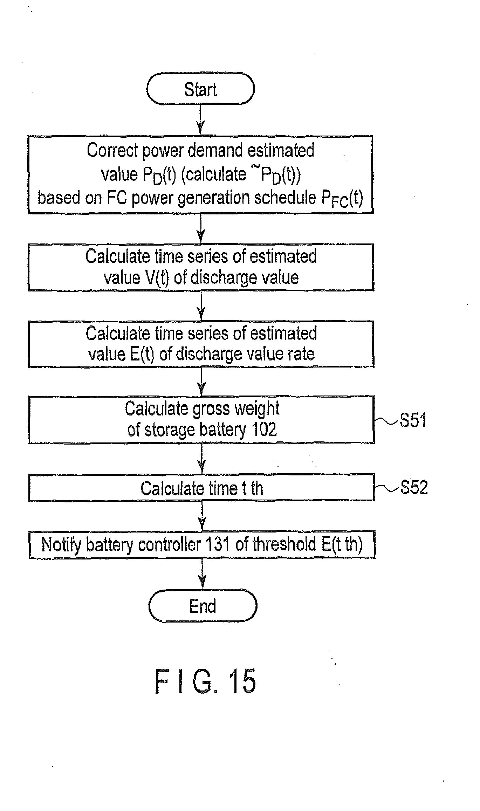

FIG. 15 is a flowchart showing an example of the processing procedure of discharge rule creation according to the second embodiment. In the second embodiment, a control unit 300d calculates a discharge value rate E(t) by the same processing as in steps S31 to S34 of FIG. 10.

The control unit 300d accumulates the charge amount based on the charge schedule of the storage battery 102, thereby calculating the total charge amount of the storage battery 102 (step S51).

The control unit 300d rearranges time indices t in descending order of the value E(t). If times t with the same value E(t) exist, the time t of larger $\tilde{P}_D(t)$ is ranked high. The control unit 300d accumulates $\tilde{P}_D(t)$ in the order of rearranged t. The time t at which the sum exceeds the total charge amount of the storage battery 102 for the first time is defined as a time tth (step S52).

In the first embodiment, E(tth) at the time tth at which the sum of $\tilde{P}_D(t)$ exceeds the dischargeable amount of the storage battery 102 (SOC at the start time of a control day) for the first time is defined as the threshold. In the second embodiment, however, E(tth) at the time tth at which the sum of $\tilde{P}_D(t)$ exceeds the total charge amount of the storage battery 102 for the first time is defined as the threshold.

Note that if the SOC of the storage battery 102 does not change before and after the scheduling period, the total charge amount is synonymous with a total discharge amount. The total discharge amount includes the SOC at the discharge start time (for example, 7:00) and the charge amount of the storage battery 102 in a day.

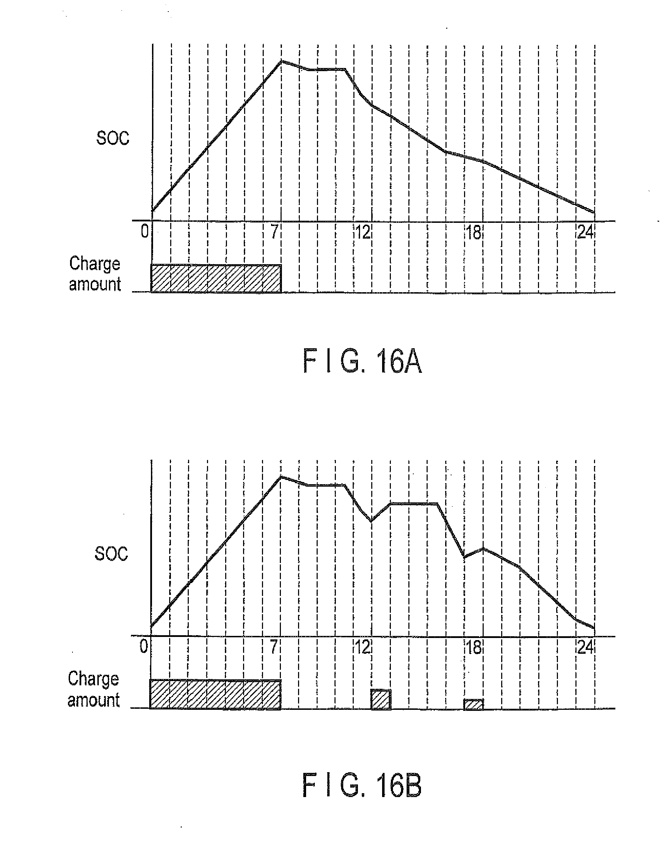

FIGS. 16A and 16B are graphs showing examples of a diurnal variation of the SOC of the storage battery 102. FIG. 16A shows a case in which charging is not performed after the start of discharge. FIG. 16B shows a case in which charging is performed even after the start of discharge. As is apparent from FIG. 16B, the storage battery 102 is charged from 12:00 to 13:00 and from 17:00 to 18:00.

As described above, in the second embodiment, the discharge rule (threshold) can be decided assuming a case in which the storage battery 102 is charged even after the start of discharge (7:00).

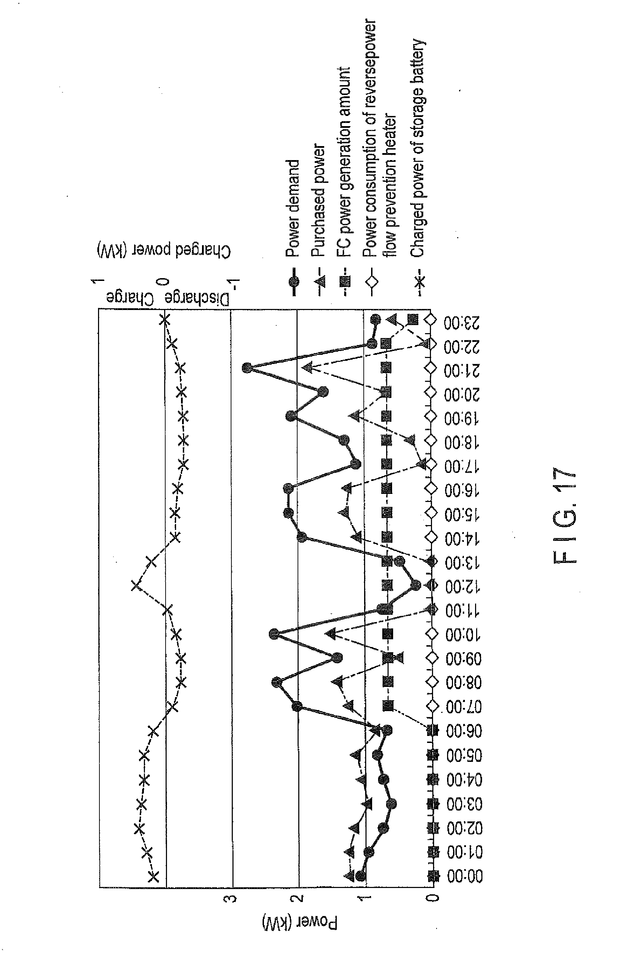

FIG. 17 is a graph for explaining an effect obtained by the second embodiment. FIG. 17 illustrates an example of the one-day operation schedules of the storage battery 102 and an FC unit 103. Each schedule is calculated based on the estimation result of the power demand and the estimation result of the hot water demand of a home 100 in one day.

Referring to FIG. 17, the unit prices of electricity for day and night are assumed. For example, the unit price of electricity is assumed to be 28 yen/kWh from 7:00 to 23:00 and 9 yen/kWh from 23:00 to 7:00 of the next day. Improvement of the heat/electricity balance by electricity selling is not assumed. That is, the graph of FIG. 7 is calculated using the power demand, hot water demand, unit price of electricity, and unit price of gas.

The operation schedule of the storage battery 102 defines to perform charging in a time zone where the unit price of electricity is low (0:00 to 6:00) and perform discharging in time zones where the unit price of electricity is high (7:00 to 10:00 and 13:00 to 22:00). Since purchased electricity in the time zones where the unit price of electricity is high decreases, the electricity bill can be reduced.

The FC unit 103 is operated to the maximum output. In a time zone where the power generation amount exceeds the power demand (12:00 to 14:00), the surplus power is accumulated in the storage battery 102. It is therefore possible to prevent generated power from wastefully being consumed (discarded) by a reverse power flow prevention heater 222 and reduce the gas bill as well. The reverse power flow prevention heater 222 remains inoperative for 24 hrs, as can be seen.

When the FC unit 103 is added to the system, the time zone appropriate for charging is not always uniquely determined from the unit price of electricity depending on whether surplus power is generated. According to the second embodiment, the storage battery can be discharged in consideration of an increase in the SOC of the storage battery 102 as well as the time zone where the unit price of electricity is low. A larger cost merit can thus be obtained.

Note that the present invention is not limited to the above-described embodiments. For example, the genetic algorithm is not the only solution to calculate an operation schedule. An optimum operation schedule can be calculated using various other algorithms.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. An energy management system for managing energy of a customer, including a first power generation unit configured to generate power derived from renewable energy, a second power generation unit configured to generate power derived from nonrenewable energy, and a battery device, comprising:

an estimation unit configured to estimate a demand of the energy of the customer to obtain an estimated value of the demand and estimate a power generation amount of the first power generation unit to obtain the estimated value of the power generation amount;
a calculation unit configured to calculate an operation schedule of the second power generation unit based on the estimated value of the demand and the estimated value of the power generation amount;
a creation unit configured to create a discharge strategy capable of maximizing a balance obtained by subtracting an electricity purchase loss from an electricity selling profit using a push up effect of a sold electricity amount by discharge of the battery device, based on the estimated value of the demand, the estimated value of the power generation amount, and the operation schedule; and

a control unit configured to control discharge of the battery device based on an actual value of the demand, the actual value of the power generation amount, the operation schedule, and the discharge strategy.

**2.** The energy management system according to claim 1, wherein the creation unit comprises:

a correction unit configured to correct the estimated value of the demand by the power generation amount of the second power generation unit based on the operation schedule;
a discharge value rate calculation unit; and
a decision unit,
the discharge value rate calculation unit calculating the estimated value of a discharge value that is a sum of a cancel amount of the electricity purchase loss when the corrected estimated value of the demand is covered by discharge of the battery device and the electricity selling profit based on the estimated value of the power generation amount for every unit period within a reference period, and
calculating, for every unit period, the estimated value of a discharge value rate that is a value obtained by dividing the estimated value of the discharge value by a discharge amount of the battery device, and
the decision unit deciding the discharge strategy so as to distribute the discharge amount of the battery device to each unit period in descending order of the estimated value of the discharge value rate.

**3.** The energy management system according to claim 2, wherein the decision unit specifies the unit period in which the sum of the demand becomes not less than a total discharge amount of the battery device when the corrected estimated value of the demand is added sequentially from the unit period in which the estimated value of the discharge value rate is high, and
defines the estimated value of the discharge value rate in the specified unit period as a threshold, and
the control unit calculates the actual value of the discharge value rate that is a value obtained by dividing, by the discharge amount, the sum of the cancel amount of the electricity purchase loss when a value obtained by correcting the actual value of the demand by the power generation amount of the second power generation unit based on the operation schedule is covered by discharge of the battery device and the electricity selling profit based on the actual value of the power generation amount, and
discharges the battery device when the actual value of the discharge value rate is not less than the threshold.

**4.** The energy management system according to claim 3, wherein the total discharge amount includes a dischargeable amount of the battery device at a start of discharge and a charge amount of the battery device within the reference period.

**5.** The energy management system according to claim 1, further comprising a local server provided in the customer and a cloud server connected to the local server via a network,
the cloud server comprising the estimation unit, the creation unit, the calculation unit, and a notification unit configured to notify the local server of the discharge strategy via the network, and
the local server comprising the control unit, and an interface configured to receive the notified discharge strategy.

**6.** An energy management method of managing energy of a customer including a first power generation unit configured to generate power derived from renewable energy, a second power generation unit configured to generate power derived from nonrenewable energy, and a battery device, comprising:

estimating a demand of the energy of the customer to obtain an estimated value of the demand;
estimating a power generation amount of the first power generation unit to obtain the estimated value of the power generation amount;
calculating an operation schedule of the second power generation unit based on the estimated value of the demand and the estimated value of the power generation amount;
creating a discharge strategy capable of maximizing a balance obtained by subtracting an electricity purchase loss from an electricity selling profit using a push up effect of a sold electricity amount by discharge of the battery device based on the estimated value of the demand, the estimated value of the power generation amount, and the operation schedule; and
controlling discharge of the battery device based on an actual value of the demand, the actual value of the power generation amount, the operation schedule, and the discharge strategy.

**7.** The energy management method according to claim 6, further comprising:

correcting the estimated value of the demand by the power generation amount of the second power generation unit based on the operation schedule;

calculating the estimated value of a discharge value that is a sum of a cancel amount of the electricity purchase loss when the corrected estimated value of the demand is covered by discharge of the battery device and the electricity selling profit based on the estimated value of the power generation amount for every unit period within a reference period;

calculating, for every unit period, the estimated value of a discharge value rate that is a value obtained by dividing the estimated value of the discharge value by a discharge amount of the battery device; and

deciding the discharge strategy so as to distribute the discharge amount of the battery device to each unit period in descending order of the estimated value of the discharge value rate.

8.  The energy management method according to claim 7, further comprising:

specifying the unit period in which the sum of the demand becomes not less than a total discharge amount of the battery device when the corrected estimated value of the demand is added sequentially from the unit period in which the estimated value of the discharge value rate is high;

defining the estimated value of the discharge value rate in the specified unit period as a threshold;

calculating the actual value of the discharge value rate that is a value obtained by dividing, by the discharge amount, the sum of the cancel amount of the electricity purchase loss when a value obtained by correcting the actual value of the demand by the power generation amount of the second power generation unit based on the operation schedule is covered by discharge of the battery device and the electricity selling profit based on the actual value of the power generation amount; and

discharging the battery device when the actual value of the discharge value rate is not less than the threshold.

9.  The energy management method according to claim 8, wherein the total discharge amount includes a dischargeable amount of the battery device at a start of discharge and a charge amount of the battery device within the reference period.

10. A program including an instruction that causes a computer to execute a method defined in any one of claims 6 to 9.

11. A server for managing energy of a customer, including a first power generation unit configured to generate power derived from renewable energy, a second power generation unit configured to generate power derived from nonrenewable energy, and a battery device, comprising:

an estimation unit configured to estimate a demand of the energy of the customer to obtain an estimated value of the demand and estimate a power generation amount of the first power generation unit to obtain the estimated value of the power generation amount;

a calculation unit configured to calculate an operation schedule of the second power generation unit based on the estimated value of the demand and the estimated value of the power generation amount;

a creation unit configured to create a discharge strategy capable of maximizing a balance obtained by subtracting an electricity purchase loss from an electricity selling profit using a push up effect of a sold electricity amount by discharge of the battery device based on the estimated value of the demand, the estimated value of the power generation amount, and the operation schedule; and

a notification unit configured to notify the customer of the discharge strategy via a network.

12. The server according to claim 11, wherein the creation unit comprises:

a correction unit configured to correct the estimated value of the demand by the power generation amount of the second power generation unit based on the operation schedule;

a discharge value rate calculation unit; and

a decision unit,

the discharge value rate calculation unit calculating the estimated value of a discharge value that is a sum of a cancel amount of the electricity purchase loss when the corrected estimated value of the demand is covered by discharge of the battery device and the electricity selling profit based on the estimated value of the power generation amount for every unit period within a reference period, and

calculating, for every unit period, the estimated value of a discharge value rate that is a value obtained by dividing the estimated value of the discharge value by a discharge amount of the battery device, and

the decision unit deciding the discharge strategy so as to distribute the discharge amount of the battery device to each unit period in descending order of the estimated value of the discharge value rate.

13. The server according to claim 12, wherein the decision unit specifies the unit period in which the sum of the demand becomes not less than a total discharge amount of the battery device when the corrected estimated value of the demand is added sequentially from the unit period in which the estimated value of the discharge value rate is high, and defines the estimated value of the discharge value rate in the specified unit period as a threshold, and
the notification unit notifies the customer of the threshold.

14. The server according to claim 13, wherein the total discharge amount includes a dischargeable amount of the battery device at a start of discharge and a charge amount of the battery device within the reference period.

**Distributed power supply**

Photovoltaic power generation

Storage battery

Wind power generation

Storage battery

Storage system for power

Power plant

Communication grid

**Social infrastructure**

EV, light rail, new transportation system

Charge station

Power grid

**HEMS**

Smart meter

Distribution switchboard

Home gateway

Home solar panel

EV

Storage battery

Home appliances (information appliances)

Fuel cell

**BEMS**

Smart meter

Distribution switchboard

Storage battery

Control server

Solar panel

LED illumination

Air conditioner

Fuel cell

F I G. 1

FIG. 2

Distribution line 21
Home network 25
Communication line 40

Cloud computing system

FIG. 3

EP 2 953 230 A1

FIG. 4

$P_H$: Power consumption of reverse power flow prevention heater

$Q_H$: Heat generation amount of reverse power flow prevention heater

FIG. 5

| Power | Value |
|-------|-------|
| 0 | 0 |
| 200 | 0.5 |
| 500 | 0.8 |
| 1000 | 0.95 |

FIG. 6

```
                    ┌─────────┐
                    │  Start  │
                    └─────────┘
                         │
                         ▼
        ┌────────────────────────────────┐
        │     Acquire power demand,       │
        │       hot water demand,         │        S11
        │ and PV power generation amount  │╌╌╌
        │       from database DB          │
        └────────────────────────────────┘
                         │
                         ▼
        ┌────────────────────────────────┐
        │     Estimate power demand,      │
        │   hot water demand, and PV      │        S12
        │     power generation amount     │╌╌╌
        └────────────────────────────────┘
                         │
                         ▼
        ┌────────────────────────────────┐        S13
        │       Optimal scheduling        │╌╌╌
        └────────────────────────────────┘
                         │
                         ▼
        ┌────────────────────────────────┐
        │   Cause user to confirm charge  │
        │      and discharge schedule     │        S14
        │  of storage battery 102 or power│╌╌╌
        │ generation schedule of FC unit 103│
        └────────────────────────────────┘
                         │          S15
                         ▼
              ◇─────────────────────◇
        NO  ◇  Execution permitted by user? ◇
    ┌───────◇─────────────────────◇
    │                 │
    │                 │ YES
    │                 ▼
    │   ┌────────────────────────────────┐
    │   │   Create control rule of storage│
    │   │     battery 102 and transmit    │        S16
    │   │       it to home gateway 7      │╌╌╌
    │   └────────────────────────────────┘
    │                 │
    │                 ▼
    │   ┌────────────────────────────────┐
    │   │  Transmit operation/stop        │
    │   │ designation and output target   │        S17
    │   │    value for power generation   │╌╌╌
    │   │ of FC unit 103 to home gateway 7│
    │   └────────────────────────────────┘
    │                 │
    │                 ▼
    │            ┌─────────┐
    │            │   End   │
    │            └─────────┘
```

# F I G. 7

| Time | 0:00 | 1:00 | ... | 23:00 |
|---|---|---|---|---|
| FC | $P_{FC}(0)$ | $P_{FC}(1)$ | ... | $P_{FC}(23)$ |
| Storage battery | $P_{SB}(0)$ | $P_{SB}(1)$ | ... | $P_{SB}(23)$ |

Individual

Generation

F I G. 8

Start

| Generation of initial individual group | ~S21 |

| Number of generations < maximum number of generations | ~S22 |

| Selection | ~S23 |

| Multiplication | ~S24 |

| Crossover | ~S25 |

| Mutation | ~S26 |

| Number of generations ++ |

| Result output | ~S27 |

End

F I G. 9

```
                    ┌──────────────┐
                    │    Start     │
                    └──────┬───────┘
                           │
                           ▼
   ┌───────────────────────────────────────────┐
   │      Correct power demand estimated        │
   │   value $P_D(t)$ (calculate $\tilde{P}_D(t)$) │ ─── S31
   │ based on FC power generation schedule $P_{FC}(t)$ │
   └───────────────────────┬───────────────────┘
                           │
                           ▼
   ┌───────────────────────────────────────────┐
   │   Create charge rule of storage battery 102 │ ─── S32
   └───────────────────────┬───────────────────┘
                           │
                           ▼
   ┌───────────────────────────────────────────┐
   │      Calculate time series of estimated    │
   │      value $V(t)$ of discharge value         │ ─── S33
   └───────────────────────┬───────────────────┘
                           │
                           ▼
   ┌───────────────────────────────────────────┐
   │      Calculate time series of estimated    │
   │      value $E(t)$ of discharge value rate    │ ─── S34
   └───────────────────────┬───────────────────┘
                           │
                           ▼
   ┌───────────────────────────────────────────┐
   │            Calculate time t th             │ ─── S35
   └───────────────────────┬───────────────────┘
                           │
                           ▼
   ┌───────────────────────────────────────────┐
   │ Notify battery controller 131 of threshold $E(t\,th)$ │ ─── S36
   └───────────────────────┬───────────────────┘
                           │
                           ▼
                    ┌──────────────┐
                    │     End      │
                    └──────────────┘
```

# F I G. 10

FIG. 11A

FIG. 11B

Time (indicating minutes totaled from 0:00)

F I G. 11C

Time (indicating minutes totaled from 0:00)

F I G. 11D

Start

Acquire discharge value
rate threshold (E(t th)) — S41

Acquire measured value
($P_D$act) of power demand — S42

Acquire measured value
($P_{PV}$act) of PV power
generation amount — S43

Acquire measured value
($P_{FC}$act) of FC power
generation amount — S44

Correct $P_D$act in consideration
of FC power generation
schedule → $\tilde{P}_D$act — S45

Calculate discharge
value (Vact) — S46

Calculate discharge
value rate (Eact) — S47

S48

Eact ≧ E(t th)

NO → Prohibit discharge

YES

Discharge $\tilde{P}_D$act — S49

End

F I G. 12

FIG. 13

F I G. 14

```
        ┌─────────────┐
        │    Start    │
        └──────┬──────┘
               │
               ▼
┌────────────────────────────────────────┐
│      Correct power demand estimated     │
│      value $P_D(t)$ (calculate $\tilde{P}_D(t)$) │
│ based on FC power generation schedule $P_{FC}(t)$ │
└────────────────────┬───────────────────┘
                     ▼
┌────────────────────────────────────────┐
│      Calculate time series of estimated │
│      value $V(t)$ of discharge value    │
└────────────────────┬───────────────────┘
                     ▼
┌────────────────────────────────────────┐
│      Calculate time series of estimated │
│      value $E(t)$ of discharge value rate │
└────────────────────┬───────────────────┘
                     ▼
┌────────────────────────────────────────┐
│           Calculate gross weight        │── S51
│          of storage battery 102         │
└────────────────────┬───────────────────┘
                     ▼
┌────────────────────────────────────────┐
│           Calculate time t th           │── S52
└────────────────────┬───────────────────┘
                     ▼
┌────────────────────────────────────────┐
│ Notify battery controller 131 of threshold $E(t\,th)$ │
└────────────────────┬───────────────────┘
                     ▼
        ┌─────────────┐
        │     End     │
        └─────────────┘
```

# F I G. 15

SOC

0    7    12    18    24

Charge
amount

FIG. 16A

SOC

0    7    12    18    24

Charge
amount

FIG. 16B

F I G. 17

## INTERNATIONAL SEARCH REPORT

| International application No. |
|---|
| PCT/JP2013/083651 |

**A. CLASSIFICATION OF SUBJECT MATTER**
*H02J3/46*(2006.01)i, *G06Q50/06*(2012.01)i, *H02J3/00*(2006.01)i, *H02J3/32* (2006.01)i, *H02J7/35*(2006.01)i, *H02J13/00*(2006.01)i

According to International Patent Classification (IPC) or to both national classification and IPC

**B. FIELDS SEARCHED**

Minimum documentation searched (classification system followed by classification symbols)
H02J3/46, G05B13/02, G06Q50/06, H01L31/042, H01M8/04, H02J3/00, H02J3/32, H02J7/35, H02J13/00

Documentation searched other than minimum documentation to the extent that such documents are included in the fields searched
Jitsuyo Shinan Koho          1922–1996     Jitsuyo Shinan Toroku Koho     1996–2014
Kokai Jitsuyo Shinan Koho     1971–2014     Toroku Jitsuyo Shinan Koho     1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-124287 A  (Sony Corp.),<br>23 June 2011 (23.06.2011),<br>paragraphs [0025], [0027], [0030], [0032], [0065]; fig. 1<br>& US 2011/0137591 A1    & CN 102111089 A | 1,5,6,10,11<br>2-4,7-9,<br>12-14 |
| A | JP 2012-152093 A  (Panasonic Corp.),<br>09 August 2012 (09.08.2012),<br>abstract; fig. 1<br>& EP 2660943 A1          & US 2013/0270911 A1<br>& CN 103283107 A | 1-14 |
| A | WO 2009/107373 A1  (Toshiba Corp.),<br>03 September 2009 (03.09.2009),<br>paragraphs [0017] to [0022]; fig. 1<br>& EP 2251751 A1          & US 2011/0087381 A1<br>& TW 200947341 A | 1-14 |

☒  Further documents are listed in the continuation of Box C.          ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    03 March, 2014 (03.03.14) | Date of mailing of the international search report<br>    11 March, 2014 (11.03.14) |
|---|---|
| Name and mailing address of the ISA/<br>    Japanese Patent Office | Authorized officer |
| Facsimile No. | Telephone No. |

Form PCT/ISA/210 (second sheet) (July 2009)

## INTERNATIONAL SEARCH REPORT

| International application No. |
| --- |
| PCT/JP2013/083651 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-333701 A  (Nippon Telegraph and Telephone Corp.), 02 December 2005 (02.12.2005), abstract; fig. 1 (Family: none) | 2-4,7-9, 12-14 |
| A | JP 2005-143218 A  (Nippon Telegraph and Telephone Corp.), 02 June 2005 (02.06.2005), abstract; fig. 1 (Family: none) | 2-4,7-9, 12-14 |

Form PCT/ISA/210 (continuation of second sheet) (July 2009)

**EP 2 953 230 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012255301 A
- JP 2010067512 A
- JP 2009240080 A
- JP 2010273407 A